# FASCICULE DE BREVET EUROPEEN

(11) **EP 2 532 405 B1**
(45) Date de publication et mention de la délivrance du brevet: **05.04.2017**
(21) Numéro de dépôt: 12170682.4
(22) Date de dépôt: 04.06.2012
(51) Int. Cl.: B01D 27/08, B01D 36/00

(54) **Filtre à carburant avec purge d'eau et élément filtrant pour un tel filtre**
Kraftstofffilter mit Wasserablasselement und Filterelement für einen solchen Filter
Fuel filter with water drain and filter element for such a filter

(30) Priorité: 09.06.2011 FR 1155073
(43) Date de publication de la demande: 12.12.2012
(73) Titulaire: SOGEFI FILTRATION, 78280 Guyancourt (FR)
(72) Inventeur: Maria, Arnaud, 92500 RUEIL MALMAISON (FR); Fache, Jérémie, 28500 CHERISY (FR)
(74) Mandataire: Cabinet Plasseraud

(56) Documents cités:
- EP-A2- 1 233 173
- WO-A1-2012/104699
- DE-U1- 9 408 687

## Description

### DOMAINE TECHNIQUE DE L'INVENTION

La présente invention est relative aux filtres à carburant, et en particulier aux filtres à gazole séparant l'eau contenue dans le carburant et comportant un dispositif de vidange pour évacuer cette eau.

### ARRIERE-PLAN TECHNOLOGIQUE DE L'INVENTION

Lors de la filtration du carburant, il est nécessaire de limiter la concentration en eau qui, lorsqu'elle est présente en trop grande quantité dans le carburant, risque d'affecter le système d'alimentation en carburant et d'injection en favorisant la corrosion de ce circuit. Pour extraire l'eau du carburant, on utilise des filtres comportant un élément filtrant séparateur d'eau, c'est-à-dire capable de séparer l'eau du carburant. La séparation d'eau est généralement réalisée au niveau du média de filtration, par exemple au moyen d'un média ou d'une toile hydrophobe qui empêche l'eau de traverser le média, par l'utilisation d'un média coalesceur dont les fibres qui le composent vont favoriser le regroupement des gouttelettes d'eau contenues dans le gazole en gouttes de taille plus importante (phénomène de coalescence) qui vont ensuite descendre par gravité en bas du filtre, ou par la combinaison d'un média coalesceur et d'une toile hydrophobe. L'eau est ensuite collectée au fond du filtre pour être purgée. Le fond du filtre présente généralement pour cela un orifice obturé par un bouchon.

Lorsque le filtre à carburant est monté dans un carter d'un véhicule, le bouchon augmente l'encombrement du filtre et il faut pouvoir retirer ce bouchon. L'accessibilité du bouchon est un problème qui a été résolu en proposant, comme indiqué par exemple dans le document FR 2 882 661, un filtre à carburant avec un obturateur de vidange sous la forme d'une tige pouvant être actionnée du côté supérieur du filtre. Le document EP 1 172 549 décrit également un filtre muni d'une tige pour le dégagement d'un orifice de vidange. Ce genre de filtre est cependant plus complexe à assembler en raison de l'utilisation d'un élément ressort et d'un actionnement indirect de l'obturateur. Il en résulte que le prix de ce genre de filtres est considéré comme élevé.

Il est connu également, par le document EP 1 163 944, un filtre à carburant qui présente une tubulure d'aspiration d'eau relié à un orifice du couvercle pour vidanger l'eau. Ceci permet, sans avoir recours à un mécanisme d'actionnement de purge complexe, de supprimer le bouchon au fond de la cuve de sorte qu'un opérateur peut réaliser l'entretien du filtre simplement avec l'accès par le dessus du filtre. La géométrie de la cuve est ainsi simplifiée. Cependant, l'intégration de la tubulure d'aspiration nécessite la suppression d'un secteur angulaire du média filtrant et l'utilisation d'une géométrie spécifique des flasques de l'élément filtrant séparateur d'eau. Le mode de fabrication de l'élément filtrant doit alors être adapté pour la fabrication du filtre à carburant.

Le document EP 1 233 173 décrit un élément filtrant sur lequel sont solidarisés d'un côté une cuve de collecte d'eau embarqué et de l'autre côté un conduit d'évacuation d'eau, le tout formant une unité échangeable pour un filtre à carburant. Lors du montage dans le filtre, un couvercle pourvu d'un raccord central pour l'évacuation d'eau doit être vissé jusqu'à ce que le conduit d'évacuation coopère avec le raccord central. Le filtre équipé de ce type d'élément filtrant peut présenter des problèmes d'encombrement et un autre genre d'élément filtrant doit être choisi si on veut ajouter un composant fonctionnel, par exemple un composant de chauffage et/ou un détecteur d'eau.

### DESCRIPTION GENERALE DE L'INVENTION

La présente invention a pour but de proposer un filtre à carburant et à vidange d'eau qui est attractif en termes de coût et aisé à installer dans l'environnement encombré d'un moteur à explosion d'un véhicule automobile.

A cet effet, il est proposé selon l'invention un filtre à carburant séparateur d'eau tel que défini dans la revendication 1.

Avec un montage décentré, le conduit d'évacuation d'eau peut être embarqué dans l'élément filtrant en étant agencé à proximité de la face interne du média filtrant. La position adjacente au média filtrant permet de laisser libre la zone centrale définie par le premier élément de paroi tubulaire, de sorte que cette zone centrale peut être aisément chauffée ou recevoir un composant fonctionnel du filtre.

L'élément filtrant peut présenter une structure maintenue à l'élément filtrant pour rigidifier ce dernier. Cette structure est par exemple de forme tubulaire et s'étend dans ledit espace intérieur. Le conduit d'évacuation d'eau fait dans ce cas partie de l'élément filtrant en étant fixé à la structure.

Grâce à ces dispositions, une forme annulaire conventionnelle du média filtrant peut être utilisée et l'encombrement du filtre à carburant peut avantageusement être réduit du côté du fond, de sorte qu'il existe une grande flexibilité d'installation du filtre. En outre, l'agencement du canal d'évacuation d'eau reste suffisamment proche de l'axe central du boîtier pour permettre (avec une forme concave conventionnelle du fond de la cuve) de vidanger une quantité plus importante d'eau.

Il faut également noter que l'assemblage de l'élément filtrant sur la paroi supérieure du boîtier peut être facilité du fait que le conduit d'évacuation d'eau est déjà embarqué dans l'élément filtrant grâce à sa fixation sur la structure de rigidification. Avantageusement, la structure et le conduit peuvent faire partie intégrante d'une cartouche filtrante amovible.

Selon une particularité, la structure de l'élément filtrant constitue une structure de canalisation propre à canaliser du carburant entre la face interne du média filtrant et l'une parmi l'entrée et la sortie. Ainsi, la structure qui supporte le conduit d'évacuation d'eau peut jouer un rôle de canalisation de carburant et de partition étanche (entre l'eau et le carburant) dans l'espace intérieur, ce qui peut permettre de minimiser l'encombrement global du filtre et de simplifier l'assemblage de l'élément filtrant.

Selon une particularité, l'extrémité supérieure est constituée par un premier flasque et l'extrémité inférieure est constituée par un deuxième flasque, le média filtrant étant disposé entre le premier flasque et le deuxième flasque, la structure étant fixée au premier flasque, et de préférence également au deuxième flasque. L'agencement avec des flasques permet d'utiliser plus facilement un média filtrant en matière souple, ce qui est avantageux en particulier pour le support et le maintien d'un média filtrant de type plissé (avec une surface de filtration plus importante).

Selon une autre particularité, la structure comprend :
un premier élément de paroi tubulaire qui s'étend entre le premier flasque et le deuxième flasque en définissant une surface extérieure en vis-à-vis du média filtrant et une surface intérieure ;
au moins un deuxième élément de paroi agencé entre le premier élément de paroi et le média filtrant, et qui présente au moins une ouverture latérale ; et
ledit conduit d'évacuation d'eau qui est intégralement formé avec l'un parmi lesdits premier et deuxième éléments de paroi.

Selon une particularité, le deuxième élément de paroi et le conduit d'évacuation d'eau sont formés d'une seule pièce en matière plastique, ce grâce à quoi on peut minimiser les étapes d'assemblage pour former l'élément filtrant.

Dans divers modes de réalisation du filtre selon l'invention, on peut éventuellement avoir recours en outre à l'une et/ou à l'autre des dispositions suivantes :
- le premier élément de paroi tubulaire définit un conduit de séparation raccordé de manière étanche respectivement au premier flasque et au deuxième flasque et qui partitionne ledit espace intérieur entre une zone en amont du média filtrant communiquant avec l'entrée de carburant et une zone en aval du média filtrant communiquant avec la sortie de carburant (avec cette disposition il est permis de faire circuler le carburant brut dans l'espace intérieur central, par exemple en étant chauffé dans cet espace intérieur central, avec la possibilité de filtrer le carburant dans un sens centripète qui est plus avantageux pour bien séparer physiquement la zone d'accumulation d'eau de l'espace intérieur central qui communique avec l'entrée et la sortie de carburant).
- le conduit d'évacuation d'eau passe au travers de l'espace intérieur et s'étend entre une première extrémité et une deuxième extrémité faisant saillie par rapport au deuxième flasque en direction du fond du boîtier, la première extrémité du conduit étant raccordée de manière étanche à l'orifice d'évacuation d'eau par des moyens de raccordement qui sont formés dans le premier flasque et/ou comprennent une pièce de raccord annulaire s'étendant entre le premier flasque et la paroi supérieure du boîtier.

- la première extrémité du conduit d'évacuation d'eau est distante de la paroi supérieure du boîtier et débouche dans une portion du volume intérieur qui est située au niveau du premier flasque ou entre le premier flasque et la paroi supérieure (cette disposition simplifie la conception du conduit d'évacuation d'eau et facilite le montage de l'élément filtrant dans le boîtier).
- la première extrémité du conduit d'évacuation d'eau est raccordée de manière étanche au premier flasque en étant emmanchée serrée dans un orifice de sortie formé dans le premier flasque (on obtient ainsi une étanchéité sans joint additionnel entre le premier flasque et la structure de rigidification.
- le premier flasque présente un bord externe et une projection annulaire adjacente au bord externe et qui fait saillie par rapport au reste du flasque en direction du couvercle, la projection annulaire définissant une cavité dans laquelle débouche ledit orifice de sortie du premier flasque, le filtre comprenant en outre une pièce de raccord annulaire montée dans la cavité pour définir une communication étanche entre ledit orifice de sortie du premier flasque et l'orifice d'évacuation d'eau du boîtier (cet agencement permet un désaxage entre la position de l'orifice d'évacuation d'eau et la partie supérieure du conduit d'évacuation d'eau débouchant à travers l'orifice de sortie du premier flasque, de sorte qu'il existe une plus grande flexibilité pour le positionnement d'une vis de purge d'eau, soupape ou connecteur similaire).
- le couvercle présente un orifice central adjacent à l'orifice d'évacuation d'eau et distinct de l'entrée et de la sortie, le filtre comprenant au moins un composant fonctionnel inséré dans le volume intérieur au travers de l'orifice central (ainsi, l'agencement du filtre permet de combiner davantage de fonctions sans augmenter l'encombrement en périphérie du boîtier).
- le composant fonctionnel peut être un composant de chauffage du carburant monté de manière amovible et étanche sur le boîtier au travers dudit orifice central, le composant de chauffage s'étendant au travers de la structure en passant par l'espace intérieur, le composant de chauffage présentant une extrémité libre qui
est de préférence en contact étanche avec le deuxième flasque (le caractère amovible permet de changer une cartouche filtrante sans changer le composant de chauffage. Le composant de chauffage peut par exemple présenter une forme externe de fourreau pour canaliser le carburant dans la zone de chauffe en amont de la filtration et l'étanchéité avec le deuxième flasque prévient le risque de retour d'eau vers l'espace intérieur central en cas d'à-coup).

Selon une particularité, l'extrémité supérieure est constituée par un premier flasque qui présente une ouverture centrale, ledit composant fonctionnel présentant une partie externe et une partie d'insertion dans le volume intérieur, l'un parmi la partie d'insertion et l'ouverture centrale, de préférence la partie d'insertion, présentant une projection saillante qui permet, en coopérant avec une entaille complémentaire de l'autre parmi la partie d'insertion et l'ouverture centrale, de guider l'insertion du composant fonctionnel. On forme ainsi des moyens de détrompage, de sorte que l'insertion de la partie interne du composant fonctionnel n'est possible que lorsque la partie externe du composant fonctionnel est déjà dans une position angulaire prédéfinie correspondant à une position finale souhaitée (par exemple une position angulaire pour laquelle la partie externe est suffisamment écartée des canules formant l'entrée et la sortie de carburant).

Selon une particularité, le boîtier comprend une cuve et un couvercle relié de manière étanche à la cuve, la paroi supérieure appartenant au couvercle et la paroi inférieure appartenant à la cuve. L'entrée de carburant, la sortie de carburant et l'orifice d'évacuation d'eau sont de préférence formées dans le couvercle, de sorte que la cuve a un encombrement réduit et l'accès aux composants du filtre peut se faire entièrement du côté du couvercle.

Par ailleurs, l'invention a également pour objet un élément filtrant formant cartouche filtrante et adapté pour coopérer dans un filtre selon l'invention, tel que défini dans la revendication 13.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe illustrant un filtre selon un premier mode de réalisation de l'invention ;
- la figure 2 est un détail du filtre de la figure 1, montrant un exemple de communication entre le conduit d'évacuation d'eau et l'orifice d'évacuation d'eau ;
- la figure 3 est une autre vue en coupe du filtre, selon un mode particulier de réalisation ;
- la figure 4 est une vue en perspective du dessus du premier flasque d'un l'élément filtrant adapté pour coopérer dans un filtre conforme à l'invention ;
- la figure 5 est une vue en perspective du composant de chauffage pouvant être associé à un filtre conforme à l'invention ;
- la figure 6 est une vue en perspective d'un élément de paroi d'une structure qui rigidifie l'élément filtrant, cet élément de paroi étant destiné à être en contact avec la face intérieure du média filtrant du filtre de la figure 1 ;
- la figure 7 est une vue en coupe illustrant un élément filtrant propre à être utilisé dans un filtre à carburant selon un deuxième mode de réalisation de l'invention.

Sur les différentes figures, les mêmes références désignent des éléments identiques ou similaires.

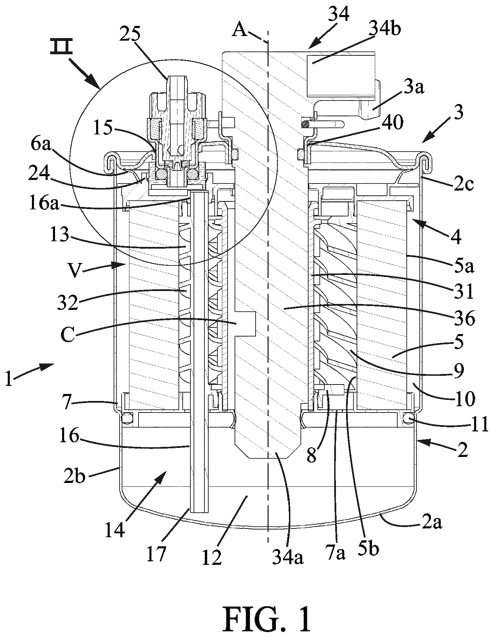

La figure 1 représente un premier mode de réalisation du filtre à liquide (gazole ou carburant similaire) avec séparateur d'eau. Ce filtre 1 comprend un boîtier (2, 3) qui présente une paroi supérieure et une paroi inférieure. Dans l'exemple non limitatif des figures, la paroi inférieure du boîtier (2, 3) est formée par une cuve 2 en métal ou en plastique. La cuve 2 présente un fond 2a à partir duquel s'étend vers le haut une paroi latérale 2b, ici sensiblement cylindrique et présentant un rebord supérieur directement solidaire d'un couvercle 3 formant la paroi supérieure du boîtier (2, 3). Ce couvercle 3 présente un bord qui est directement fixé sur le bord annulaire (ici circulaire) de la cuve 2. Plus généralement, on comprend que le couvercle 3 est relié de manière étanche à la cuve 2.

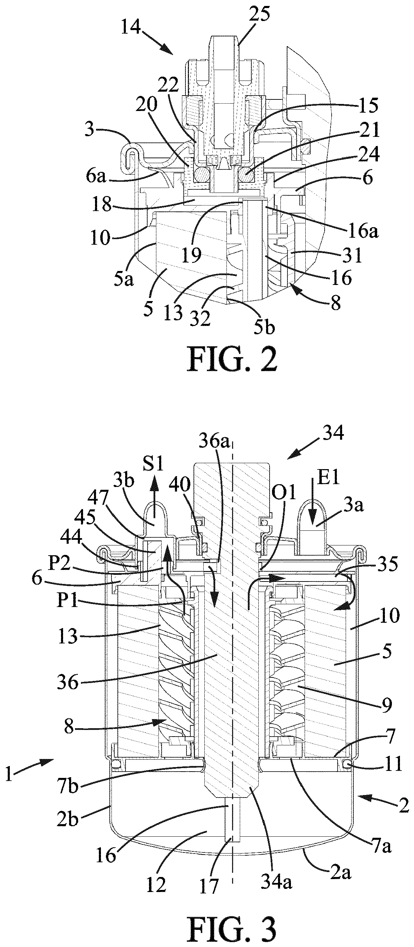

Le bord du couvercle 3 peut être, par exemple, serti, soudé, vissé ou collé sur le bord de la cuve 2. Comme illustré sur la figure 3, ce couvercle 3 présente une entrée de carburant 3a ou autre liquide comparable à filtrer ainsi qu'une sortie de carburant 3b ou autre liquide filtré pour permettre la circulation et la filtration du carburant à l'intérieur du filtre 1 séparateur d'eau. Le boîtier (2, 3) est raccordable de façon interchangeable à des conduites d'un système d'alimentation en carburant d'un véhicule à moteur à combustion.

La cuve 2 ainsi que le couvercle 3 forment un boîtier délimitant un volume intérieur V dans lequel est disposé un élément filtrant 4 de forme annulaire et s'étendant suivant l'axe central de révolution A. L'élément filtrant 4 présente ici un média filtrant 5, un premier flasque appelé dans ce qui suit flasque supérieur 6, un deuxième flasque appelé dans ce qui suit flasque inférieur 7 et une structure 8 de forme sensiblement tubulaire qui rigidifie l'élément filtrant 4 et qui peut permettre de canaliser du carburant. La structure 8 s'étend ici entre le flasque supérieur 6 et le flasque inférieur 7. Le média filtrant 5 s'étend de préférence autour d'un axe central A qui peut éventuellement coïncider avec l'axe de révolution de la cuve 2 lorsque la paroi 2b est cylindrique. Bien entendu, d'autres formes de réalisation de l'élément filtrant 4 peuvent être utilisées, par exemple avec seulement le flasque supérieur 6 ou sans aucun flasque axial, la structure 8 pouvant dans ce cas être maintenue en position par un contact avec la face interne 5b du média filtrant 5.

En référence aux figures 1 et 3, le média filtrant 5 présente une face externe 5a et une face interne 5b. Sa face interne 5b délimite un espace intérieur creux 9. Sa face externe 5a délimite avec la paroi latérale 2b de la cuve 2 un espace annulaire 10. Le média filtrant 5 s'étend autour de l'axe central A entre une extrémité supérieure et une extrémité inférieure. L'extrémité supérieure du média filtrant 5 est fixée de manière étanche au flasque supérieur 6 tandis que l'extrémité inférieure du média filtrant 5 est fixée de manière étanche au flasque inférieur 7.

Le média filtrant 5 est disposé autour de la structure 8. Le liquide à filtrer, par exemple du gazole ou carburant similaire, peut passer à travers le média filtrant 5 qui retient les impuretés notamment solides et l'eau. Le média filtrant 5 a de préférence une fonction de coalesceur. Cette fonction peut éventuellement être réalisée par une toile hydrophobe qui empêche l'eau de traverser le média filtrant 5. Selon un exemple nullement limitatif, la toile hydrophobe peut être agencée du côté de la face interne 5b ou alternativement du côté de la face externe 5a (avec dans ce cas une voie de communication adaptée pour que l'eau s'écoule par gravité dans la zone d'accumulation d'eau 12). Le média filtrant 5 peut être d'un genre connu en soi et ne sera pas davantage décrit ici.

En référence aux figures 1, 3-4 et 7, le flasque supérieur 6 et le flasque inférieur 7 présentent également une forme annulaire avec une ouverture (O1, respectivement 02) ayant un diamètre sensiblement identique au diamètre interne d'un conduit axial C traversant formé à travers l'élément filtrant 4. Le flasque inférieur 7 peut cependant être réalisé différemment, par exemple en présentant une ouverture plus large que le flasque supérieur 6 (cas de moindre préférence où le carburant peut circuler par exemple depuis le conduit axial C en direction du fond 2a de la cuve 2 pour ensuite être dirigé vers l'espace annulaire 10).

Le flasque supérieur 6 comporte en outre un rebord périphérique 6a externe saillant (ici saillant vers le haut et radialement vers l'extérieur) qui est en contact avec le couvercle 3. Dans l'exemple nullement limitatif des figures 1 et 3, ce rebord périphérique 6a et un joint annulaire 11 permettent par un contact respectif avec le boîtier (2, 3) d'isoler l'espace annulaire 10 respectivement par rapport à la zone d'accumulation d'eau 12 sur le fond 2a de la cuve 2 fond et par rapport à l'entrée de carburant 3a.

L'élément filtrant 4 est disposé dans le volume intérieur V à distance du fond 2a. Il est de préférence en position adjacente au couvercle 3, de sorte à ménager une zone d'accumulation d'eau de hauteur suffisante (par exemple plus de 10mm et de préférence plus de 15 ou 20mm) entre le flasque inférieur 7 de l'élément filtrant 4 et le fond 2a.

On peut voir sur les figures 1 et 3 que la structure 8 est fixée au flasque supérieur 6 et de préférence aussi au flasque inférieur 7, de façon à délimiter intérieurement un conduit axial C qui traverse l'élément filtrant 4. Dans cet exemple non limitatif, la structure 8 délimite aussi extérieurement un espace annulaire interne 13 formé le long de la face interne 5b du média filtrant 5, entre le conduit axial C et cette face interne 5b. Le carburant arrivant dans cet espace annulaire interne 13 (qui fait partie de la zone en aval du média filtrant 5) est ainsi canalisé par la structure 8 pour rejoindre la sortie 3b, comme cela est bien visible sur la figure 3. L'espace intérieur 9 est alors partitionné entre le conduit axial C d'une part, et l'espace annulaire interne 13 d'autre part.

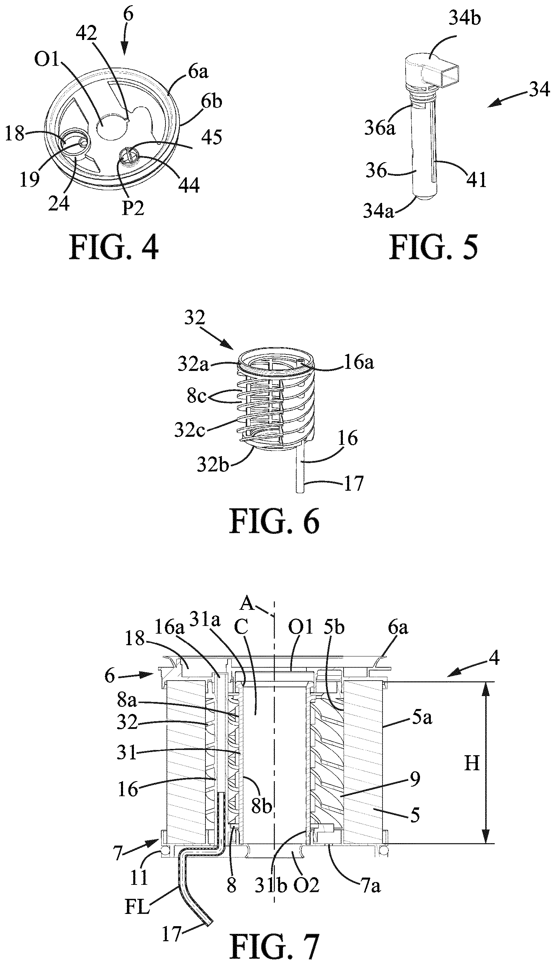

Plus généralement, on comprend que la structure 8 permet de canaliser du carburant dans une zone de circulation formée entre la face interne 5b du média filtrant 5 et l'une parmi l'entrée 3a et la sortie 3b de carburant. Dans l'exemple non limitatif des figures 1-3, cette zone de circulation se situe en aval par rapport au média filtrant 5 et communique avec la sortie 3b par le biais d'un ou plusieurs passages P1 formés entre les deux éléments de paroi 31, 32 et d'un passage P2 (visible sur les figures 3 et 4) formé dans le flasque supérieur 6. Il doit cependant être compris que d'autres types de cheminement du carburant peuvent être utilisés en utilisant dans l'élément filtrant 4 une structure 8 à fonction de canalisation placée du côté interne par rapport au média filtrant 5 et s'étendant ainsi dans l'espace intérieur 9.

Comme cela est visible sur les figures 1 et 3, le filtre 1 comporte un dispositif de vidange d'eau 14 permettant de faire circuler de l'eau depuis la zone d'accumulation 12 jusqu'à un orifice 15 d'évacuation d'eau formé dans le boîtier (2, 3). L'orifice 15 d'évacuation d'eau est formé à distance du fond 2a de la cuve 2 pour ne pas gêner la mise en place du filtre 1 sous le capot d'un véhicule motorisé et facilite l'accès à cet orifice 15 d'évacuation d'eau. Dans le mode de réalisation préféré des figures 1-3, l'orifice 15 d'évacuation d'eau est formé dans le couvercle 3. Le dispositif de vidange d'eau 14 comprend cet orifice 15 d'évacuation d'eau et au moins un conduit 16 d'évacuation d'eau s'étendant dans le volume intérieur V et en communication fluidique avec l'orifice 15 d'évacuation d'eau. Dans l'exemple représenté sur la figure 1, le conduit 16 d'évacuation d'eau comporte un tube cylindrique et parallèle à l'axe central A de l'élément filtrant 4, qui est solidaire de la structure 8. Le conduit 16 d'évacuation d'eau peut être formé d'une seule pièce, de préférence en plastique, qui s'étend entièrement en dessous et à distance du couvercle 3. On comprend que le conduit 16 d'évacuation d'eau s'étend d'une hauteur (évidemment mesurée suivant la direction définie par l'axe central A) qui est au moins égale à la hauteur H du média filtrant 5.

Le conduit 16 d'évacuation d'eau s'étend entre une première extrémité 16a raccordée de manière étanche au flasque supérieur 6 et une deuxième extrémité 17 faisant saillie par rapport au flasque inférieur 7 en direction du fond 2a de la cuve 2. Dans la variante de réalisation de la figure 7, la deuxième extrémité 17 peut être formée par un tube flexible FL qui se raccorde de manière étanche à la pièce principale du conduit 16 qui s'étend entre les deux flasques 6, 7. Le tube flexible FL peut aussi être remplacé par un tube peu souple ou rigide formant une rallonge du tube principal.

La première extrémité 16a est distante du couvercle 3 et débouche dans une portion du volume intérieur V qui peut être située entre Le flasque supérieur 6 et le couvercle 3 ou au même niveau que le flasque supérieur 6 comme cela est visible sur la figure 2. Dans cet exemple non limitatif et comme montré sur la figure 3, une cavité 18 en communication étanche avec la sortie 3b est prévue entre le couvercle 3 et le flasque supérieur 6 pour recevoir l'eau ayant circulé à travers le conduit 16.

La première extrémité 16a du conduit 16 d'évacuation d'eau est raccordée de manière étanche au flasque supérieur 6 en étant emmanchée serrée dans un orifice de sortie 19 formé dans le premier flasque 6. Cet orifice de sortie 19 du flasque supérieur 6 débouche dans la cavité 18 comme cela est visible sur les figures 2 et 4. A titre d'exemple pour obtenir l'étanchéité, une pièce de raccord annulaire 20 peut être montée dans la cavité 18 (en étant emmanchée serrée) et supporte un joint annulaire d'étanchéité 21 en contact avec un conduit 22 formant l'orifice 15 d'évacuation d'eau du couvercle 3. La pièce de raccord annulaire 20 permet ainsi une communication étanche entre l'orifice de sortie 19 du premier flasque et l'orifice 15 d'évacuation d'eau. Ici, La cavité 18 est délimitée par une projection annulaire 24 du flasque supérieur 6.

En référence à la figure 4, ce flasque supérieur 6 présente un bord externe 6b, ici circulaire, près duquel est agencé le rebord périphérique 6a externe saillant. La projection annulaire 24 est également agencée en position adjacente au bord externe 6b. La projection annulaire 24 est par exemple cylindrique et fait saillie par rapport au reste du flasque 6 en direction du couvercle 3. On obtient avec cette disposition une communication fluidique étanche entre l'orifice de sortie 19 du premier flasque 6 et l'orifice 15 d'évacuation d'eau. Une vis de purge 25 ou connecteur similaire du dispositif de vidange d'eau 14 permet d'obturer de façon étanche l'orifice 15 d'évacuation d'eau. Un tel connecteur peut être d'un type connu en soi (avec une partie externe pouvant s'engager avec un outil conventionnel où pouvant être prise en main) et permet de connecter un tuyau flexible pour amener l'eau hors du boîtier (2, 3).

En référence aux figures 1 et 2, la vis de purge 25 est par exemple vissée dans une pièce formant le conduit 22. Ce conduit 22 en tôle emboutie peut former un logement dans lequel est brasé ou serti un insert comportant un taraudage permettant le vissage de la vis de purge 25. Ce conduit 22 est ici brasé sur le couvercle 3 et présente une portion inférieure insérée sous le couvercle 3 et qui vient s'appuyer sur le joint annulaire d'étanchéité 21. L'ouverture inférieure du conduit 22 débouche dans la cavité 18.

Le conduit 16 d'évacuation d'eau permet donc de récupérer l'eau par aspiration, par exemple à l'aide d'une pompe d'aspiration externe au moteur ou par la pression de carburant engendrée par la pompe à carburant, et fonctionne ainsi à la manière d'une paille pour acheminer l'eau dans la cavité 18, l'eau étant ensuite extraite hors du boîtier (2, 3) au travers du conduit 22.

Bien entendu, d'autres modes d'obtention de l'étanchéité peuvent être utilisés. A titre d'exemple, lorsque l'extrémité 16a du conduit 16 d'évacuation d'eau est coaxiale avec la position de la vis de purge 25, la pièce de raccord annulaire 20 peut être supprimée. On comprend ainsi que le dispositif de purge 14 se présente en au moins deux parties raccordées de manière étanche dont l'une (le conduit 16 d'évacuation d'eau) appartient à l'élément filtrant 4 et l'autre est montée sur le couvercle 3 ou paroi supérieure équivalente du boîtier (2, 3). La liaison étanche est réalisée par utilisation d'une paroi annulaire d'assemblage avec des raccords étanches sur le flasque supérieur 7, à une extrémité, et sur le couvercle 3, sur l'autre extrémité. Dans l'exemple des figures, La paroi annulaire est définie par la pièce de raccord annulaire 20 mais les moyens de raccordement peuvent se présenter sous toute autre forme adéquate, par exemple en utilisant une terminaison du conduit 16 adaptée qui s'étend dans l'espace intercalaire entre le flasque supérieur 7 et le couvercle 3.

En référence aux figures 1 et 3, la structure 8 se présente ici en plusieurs portions, avec :
- un premier élément de paroi tubulaire 31 qui s'étend entre le flasque supérieur 6 et le flasque supérieur 7 en définissant une surface extérieure 8a en vis-à-vis du média filtrant 5 et une surface intérieure 8b ;
- au moins un deuxième élément de paroi 32 agencé entre le premier élément de paroi tubulaire 31 et le média filtrant 5, et qui présente au moins une ouverture latérale 8c ; et
- le conduit 16 d'évacuation d'eau qui est intégralement formé avec le deuxième élément de paroi 32, comme cela est visible en particulier sur la figure 6.

Le premier élément de paroi tubulaire 31 délimite le conduit axial C comme cela est visible sur la figure 7 et s'engage de manière étanche, par exemple par encliquetage au niveau de ses extrémités 31 a, 31 b avec les deux flasques supérieur et inférieur 6, 7. Le deuxième élément de paroi 32 s'engage également, par exemple par encliquetage au niveau de ses extrémités 32a, 32b avec les deux flasques supérieur et inférieur 6, 7.

Comme cela est visible sur la figure 3, le premier élément 31 partitionne l'espace intérieur 9 entre une zone en amont du média filtrant 5 communiquant avec l'entrée 3a et une zone en aval du média filtrant 5 communiquant avec la sortie 3b.

Le deuxième élément de paroi 32 présente ici des portions hélicoïdales ou ailettes 32c qui s'étendent à la manière d'un filetage autour de l'axe central A depuis l'extrémité supérieure 32a de forme annulaire jusqu'à l'extrémité inférieure 32b, également de forme annulaire. Cette géométrie permet de maintenir efficacement, de manière annulaire, le média filtrant 5 tout en permettant à l'eau séparée du média filtrant 5 de s'écouler de manière gravitaire pour rejoindre la zone d'accumulation d'eau 12, par l'intermédiaire d'orifice(s) 7a formés dans le flasque inférieur 7. Les ailettes 32c forment en outre une barrière physique qui s'oppose à une remontée de l'eau vers la sortie 3b de carburant lors d'un bref à-coup pouvant se produire lors de la conduite d'un véhicule. Bien entendu, d'autres formes peuvent être utilisées pour ce deuxième élément de paroi 32. Dans une variante, le deuxième élément de paroi 32 peut être intégralement formé avec le premier élément de paroi tubulaire 31 en formant des nervures hélicoïdales sur la face extérieure 8a, le conduit 16 étant par exemple clipsé dans ces nervures.

En référence aux figures 1 à 5, on peut voir que la structure 8 s'étend autour de l'axe central A pour permettre l'insertion au travers du conduit axial C d'un ou plusieurs composants fonctionnels du filtre 1. Dans l'exemple représenté un composant de chauffage 34, éventuellement équipé ou associé à un détecteur de niveau d'eau, peut ainsi être inséré successivement à travers un orifice central 40 du couvercle 3 (ici adjacent à l'orifice 15 d'évacuation d'eau) et l'ouverture centrale O1 du flasque supérieur 6. Un ou plusieurs joints sont associés de façon connue en soi au composant de chauffage 34 pour maintenir l'étanchéité du volume intérieur V. Le flasque inférieur 7 présente ici une lèvre d'étanchéité annulaire 7b pour séparer le conduit axial C de la zone d'accumulation d'eau 12.

Dans un mode de réalisation préféré, le composant de chauffage 34 comprend une partie d'insertion dans le volume intérieur V qui présente une nervure externe ou projection saillante similaire 41 allongée suivant la direction d'insertion du composant de chauffage 34. Le flasque supérieur 6 présente une ouverture centrale O1 pour l'accès au conduit axial C qui présente une entaille ou encoche externe 42 permettant de guider l'insertion du composant de chauffage 34. Ce type de détrompage par coopération d'une entaille et d'un relief saillant permet de guider et maintenir avec certitude la bonne position angulaire du composant de chauffage 34. Ainsi dans l'exemple représenté avec une projection saillante 41 allongée formée sur la surface extérieure du fourreau 36, la partie de connectique 34b du composant de chauffage 34 est placée à distance des canules radiales (ici alignées) prévues pour l'entrée 3a et la sortie 3b, et cela dès le début du montage. Bien entendu, tout autre composant fonctionnel qu'un composant de chauffage 34 peut être monté dans le filtre 1 de façon similaire. On comprend que l'agencement du conduit 16 d'évacuation d'eau, à distance de l'axe central A est avantageuse pour l'intégration d'un composant de chauffage de type "crayon" et permet de limiter l'encombrement en largeur du boîtier (2, 3).

La figure 3 illustre un exemple de circulation du carburant selon le trajet référencé à l'aide de la flèche E1 et des flèche suivantes jusqu'à la sortie 3b (voir la flèche S1). Dans ce cas le carburant brut est chauffé en amont du média filtrant 5 par le composant de chauffage 34 et circule de façon similaire à ce qui a été décrit dans les figures 4 et 5 du brevet EP 1 702 662 B1, en passant par un conduit intermédiaire 35 afin de rejoindre l'espace annulaire 10 après avoir été chauffé dans l'espace intérieur 9, à l'intérieur du conduit axial C. Le composant de chauffage 34 présente alors une partie d'insertion formant fourreau 36 pour canaliser le carburant, ce fourreau 36 étant directement disposé à l'intérieur du conduit axial C. Le fourreau 36 est réalisé par exemple en plastique et présente une extrémité supérieure qui est raccordée de manière étanche à l'entrée de liquide 3a via une ouverture circulaire ou un passage 36a coïncidant avec l'ouverture O1 du flasque supérieur 6. L'extrémité inférieure du fourreau 36 est fermée et forme l'extrémité libre 34a du composant de chauffage. Ce fourreau 36 assure une protection de l'élément de chauffage lors du retrait du composant de chauffe 34. Comme cela est visible sur les figures 1 et 3, la partie de connectique 34b du composant de chauffage 34 est située en dehors du boîtier (2, 3).

L'élément filtrant 4 formant cartouche filtrante va à présent être décrit en liaison avec les figures 1-4 et 7.

L'élément filtrant 4 forme une unité amovible adaptée pour être insérée à l'intérieur de la cuve 2. Dans cet exemple non limitatif, le flasque supérieur 6 visible sur la figure 4 présente un rebord périphérique 6a saillant, près du bord externe 6b, qui forme une première lèvre d'étanchéité. Le flasque supérieur présente également une deuxième lèvre d'étanchéité 44 visible sur les figures 3-4, qui est formée autour d'un conduit de passage du flasque supérieur 6 permettant au carburant filtré de rejoindre la sortie 3b. Ces lèvres d'étanchéité sont en contact avec le couvercle 3 pour séparer la zone en amont du média filtrant 5 de la zone en aval du média filtrant 5.

On peut voir sur la figure 4 que la projection annulaire 24 sépare une troisième zone, distincte des zones d'amont et d'aval formées en dessous du couvercle 3, et réservée pour le passage de l'eau lors d'une phase de purge. La conception du flasque supérieur 6 est avantageuse en ce qu'elle permet d'éviter d'intégrer dans l'élément filtrant 4 des joints additionnels pour partitionner l'espace situé entre le flasque supérieur 6 et le couvercle 3. Autrement dit, le flasque supérieur 6 cumule une fonction de maintien du média filtrant 5 et d'assemblage avec le couvercle 3.

Pour faciliter le positionnement de l'élément filtrant par rapport au couvercle, des moyens de guidage peuvent être prévus sur l'un et/ou l'autre des flasques 6, 7. Les figures 3-4 montrent ainsi une patte 45 en saillie au dessus du flasque supérieur 6, formée à l'aplomb ou a proximité du passage P2 d'évacuation du carburant. Cette patte 45 peut spécifiquement traverser le couvercle 3 lorsqu'elle pénètre dans une cavité 45 adjacente ou confondue avec la sortie 3b de carburant. On fournit ainsi des moyens de détrompage (45, 47) permettant de s'assurer que l'élément filtrant 4 est dans une position angulaire correcte par rapport au couvercle 3.

Comme cela est visible sur la figure 7, l'intégration du conduit 16 d'évacuation d'eau peut être réalisée sans joints supplémentaires pour la fixation à l'élément filtrant 4. Ainsi la connexion du conduit 16 prévoit un simple serrage (fixation emmanché serré) ou soudage au travers de l'orifice 19 du flasque supérieur 6 et le montage à travers une ou plusieurs lumières du flasque inférieur 7 sans étanchéité particulière.

Dans cet exemple le tuyau ou tube flexible FL connecté au conduit 16 peut être monté en butée à l'aide d'un changement de diamètres (par exemple réduction du diamètre en partie basse du conduit 16). Ce tube flexible FL est alors emmanché serré ou collé dans le conduit 16.

Un avantage de l'agencement du conduit 16 d'évacuation d'eau au niveau de la structure 8 est de déporter la partie la plus longue du canal de purge à distance du couvercle (la structure 8 et le conduit 16 étant ici entièrement distincts du couvercle 3). En effet, la structure 8 et le conduit 16 allongé associé peuvent se présenter sous une forme inséparable de l'élément filtrant 4. L'élément filtrant 4 équipé du conduit 16 d'évacuation d'eau peut ainsi former une unité ou cartouche filtrante, comme cela est visible notamment sur la figure 7.

Le boîtier (2, 3) peut présenter des moyens de fixation amovible pour démonter le couvercle 3 et permettre de changer l'élément filtrant 4. A titre d'exemple non limitatif, le sertissage du couvercle 3 montré sur les figures 1-3 est par exemple remplacé par un vissage entre des parties filetées. On comprend que l'élément filtrant 4 peut être balayé dans la direction radiale, une fois orientée en position de montage suivant un axe vertical du véhicule, dans le boîtier (2, 3). Cependant un élément filtrant 4 avec un média filtrant 5 balayé dans une direction axiale et embarquant le conduit 16 d'évacuation d'eau pourrait, dans une variante de réalisation de l'invention, être utilisé en coopérant avec un couvercle 3 adapté pour ce type de circulation du carburant. On comprend donc que le chemin de circulation du carburant peut être largement adapté tout en conservant la fonction de séparateur d'eau du média filtrant et la fonction de purge par utilisation d'un conduit 16 qui s'étend depuis la zone d'accumulation d'eau 12 et communique fluidiquement avec l'orifice 15 d'évacuation d'eau formé dans le couvercle 3 (cet orifice 15 pouvant plus généralement être disposé du côté opposé au fond du boîtier (2, 3)).

Parmi les avantages de l'agencement du filtre 1 selon l'invention, on peut noter que l'eau peut être vidangée par le haut sans ouvrir le boîtier (2, 3) et le filtre présente une grande flexibilité pour intégrer des composants fonctionnels tels qu'un réchauffeur et un détecteur de niveau d'eau.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Filtre à carburant (1) séparateur d'eau, comportant :
- un boîtier (2, 3) comprenant une paroi supérieure et une paroi inférieure présentant un fond (2a), le boîtier délimitant un volume intérieur (V) et présentant une entrée de carburant brut (3a) et une sortie de carburant filtré (3b) agencées à distance dudit fond (2a) ;
- un élément filtrant (4) disposé dans le volume intérieur (V), à distance du fond (2a) de sorte à ménager une zone d'accumulation d'eau entre l'élément filtrant et le fond, ledit élément filtrant (4) comportant une extrémité supérieure, une extrémité inférieure et un média filtrant (5) sensiblement annulaire s'étendant autour d'un axe central (A) entre l'extrémité supérieure et l'extrémité inférieure, le média filtrant (5) ayant une face interne (5b) qui délimite un espace intérieur (9) ;
- un passage axial du filtre qui traverse la paroi supérieure et rejoint l'espace intérieur (9) au travers d'une ouverture centrale (O1) de ladite extrémité supérieure ; et
- un dispositif (14) de vidange d'eau qui traverse un orifice (15) d'évacuation d'eau formé à distance du fond (2a) dans le boîtier (2, 3), le dispositif (14) de vidange d'eau comprenant au moins un conduit (16) d'évacuation d'eau qui s'étend dans le volume intérieur (V) ;
**caractérisé en ce que** le conduit (16) d'évacuation d'eau traverse l'espace intérieur (9), en étant disposé de préférence dans une position adjacente au média filtrant, et est solidaire de l'élément filtrant (4) en étant décalé par rapport à l'axe central (A) du média filtrant (5) pour ne pas interférer avec le passage axial du filtre traversant l'ouverture (O1).

2. Filtre selon la revendication 1, dans lequel l'élément filtrant (4) comprend une structure (8) de forme sensiblement tubulaire qui s'étend dans ledit espace intérieur (9) et est solidaire de l'élément filtrant, le conduit (16) d'évacuation d'eau étant de préférence directement raccordé à la structure (8).

3. Filtre selon la revendication 2, dans lequel la structure (8) constitue une structure de canalisation propre à canaliser du carburant entre la face interne (5b) du média filtrant (5) et l'une parmi l'entrée (3a) et la sortie (3b).

4. Filtre selon l'une quelconque des revendications 1 à 3, dans lequel l'extrémité supérieure est constituée par un premier flasque (6) et l'extrémité inférieure est constituée par un deuxième flasque (7), le média filtrant (5) étant disposé entre le premier flasque et le deuxième flasque.

5. Filtre selon la revendication 4, dans lequel l'élément filtrant (4) comprend une structure (8) de forme sensiblement tubulaire qui s'étend dans ledit espace intérieur (9) et est fixée au premier flasque (6), et de préférence également au deuxième flasque (7), ladite structure (8) comprenant :
- un premier élément de paroi tubulaire (31) qui s'étend entre le premier flasque (6) et le deuxième flasque (7), le premier élément de paroi tubulaire (31) définissant une surface extérieure (8a) en vis-à-vis du média filtrant (5) et une surface intérieure (8b) ;
- au moins un deuxième élément de paroi (32) agencé entre le premier élément de paroi tubulaire (31) et le média filtrant (5), et qui présente au moins une ouverture latérale (8c) ; et
- ledit conduit (16) d'évacuation d'eau qui est intégralement formé avec l'un parmi lesdits premier et deuxième éléments de paroi (31, 32).

6. Filtre selon la revendication 5, dans lequel le premier élément de paroi tubulaire (31) définit un conduit de séparation raccordé de manière étanche respectivement au premier flasque (6) et au deuxième flasque (7) et qui partitionne ledit espace intérieur (9) entre une zone en amont du média filtrant (5) communiquant avec l'entrée de carburant (3a) et une zone en aval du média filtrant (5) communiquant avec la sortie de carburant (3b).

7. Filtre selon l'une quelconque des revendications 4 à 6, dans lequel le conduit (16) d'évacuation d'eau passe au travers de l'espace intérieur (9) et s'étend entre une première extrémité (16a) et une deuxième extrémité (17) faisant saillie par rapport au deuxième flasque (7) en direction du fond (2a) du boîtier (2, 3), la première extrémité (16a) du conduit (16) étant raccordée de manière étanche à l'orifice (15) d'évacuation d'eau par des moyens de raccordement qui sont formés dans le premier flasque (6) et/ou comprennent une pièce de raccord annulaire (20) s'étendant entre le premier flasque (6) et la paroi supérieure du boîtier (2, 3).

8. Filtre selon la revendication 7, dans lequel la première extrémité (16a) du conduit (16) d'évacuation d'eau est distante de la paroi supérieure et débouche dans une portion du volume intérieur (V) qui est située au niveau du premier flasque (6) ou entre le premier flasque et la paroi supérieure.

9. Filtre selon l'une quelconque des revendications précédentes, dans lequel la paroi supérieure présente un orifice central (40) adjacent à l'orifice (15) d'évacuation d'eau et distinct de l'entrée (3a) et de la sortie (3b), le filtre (1) comprenant au moins un composant fonctionnel (34) inséré dans le volume intérieur (V) au travers de l'orifice central (40) et par ledit passage axial.

10. Filtre selon la revendication 9 lorsqu'elle dépend de la revendication 2, dans lequel ledit composant fonctionnel est un composant de chauffage (34) du carburant monté de manière amovible et étanche sur le boîtier (2, 3) au travers dudit orifice central (40), ledit composant de chauffage s'étendant au travers de la structure (8) en passant par ledit espace intérieur (9).

11. Filtre selon la revendication 9 ou 10, dans lequel l'extrémité supérieure est constituée par un premier flasque (6) qui présente ladite ouverture centrale (O1), ledit composant fonctionnel (34) présentant une partie externe et une partie d'insertion dans le volume intérieur (V), l'un parmi la partie d'insertion et l'ouverture centrale (O1), de préférence la partie d'insertion, présentant une projection saillante (41) qui permet, en coopérant avec une entaille complémentaire (42) de l'autre parmi la partie d'insertion et l'ouverture centrale (O1), de guider l'insertion du composant fonctionnel (34).

12. Filtre selon l'une quelconque des revendications précédentes, dans lequel le boîtier (2, 3) comprend une cuve (2) et un couvercle (3) relié de manière étanche à la cuve, ladite paroi supérieure appartenant au couvercle (3) et ladite paroi inférieure appartenant à la cuve (2), l'entrée (3a), la sortie (3b) et l'orifice (15) d'évacuation d'eau étant formées dans le couvercle (3).

13. Elément filtrant (4) formant cartouche filtrante, adapté pour coopérer dans un filtre à carburant (1) selon l'une quelconque des revendications 1 à 12, comprenant une extrémité supérieure par exemple sous la forme d'un premier flasque (6), une extrémité inférieure par exemple sous la forme d'un deuxième flasque (7), un média filtrant (5) sensiblement annulaire s'étendant au tour d'un axe central (A) entre l'extrémité supérieure et l'extrémité inférieure, le média filtrant ayant une face interne (5b) qui délimite un espace intérieur (9), l'élément filtrant comprenant en outre :
- une structure (8) qui est maintenue à l'élément filtrant (4), la structure s'étendant de préférence dans ledit espace intérieur (9) ;
- une ouverture centrale (O1) formée dans l'extrémité supérieure ; et
- au moins un conduit (16) s'étendant entre une première extrémité (16a) située du côté de l'extrémité supérieure de l'élément filtrant et une deuxième extrémité (17) faisant saillie axialement vers l'extérieur par rapport à l'extrémité inférieure de l'élément filtrant pour pouvoir plonger dans une zone d'accumulation d'eau (12) du filtre à carburant (1) ;
**caractérisé en ce que** le conduit (16) s'étend dans l'espace intérieur (9), en étant disposé de préférence dans une position adjacente au média filtrant, et est solidaire de ladite structure (8) en étant décalé par rapport à l'axe central (A) du média filtrant (5) pour ne pas interférer avec un passage axial du filtre traversant l'ouverture (O1) et permet de faire circuler de l'eau entre une ouverture d'entrée définie par la deuxième extrémité (17) et une ouverture de sortie définie par la première extrémité (16a).

## Patentansprüche

1. Wasserabscheidender Kraftstofffilter (1), umfassend:
- ein Gehäuse (2, 3), umfassend eine obere Wand und eine untere Wand, die einen Boden (2a) aufweist, wobei das Gehäuse ein Innenvolumen (V) begrenzt und einen Rohkraftstoffeinlass (3a) und einen Auslass für gefilterten Kraftstoff (3b) aufweist, die mit Abstand von dem Boden (2a) angeordnet sind;
- ein Filterelement (4), das in dem Innenvolumen (V) mit Abstand von dem Boden (2a) derart angeordnet ist, um einen Wasseransammlungsbereich zwischen dem Filterelement und dem Boden einzurichten, wobei das Filterelement (4) ein oberes Ende, ein unteres Ende und ein im Wesentlichen ringförmiges Filtermedium (5) aufweist, das sich um eine zentrale Achse (A) zwischen dem oberen Ende und dem unteren Ende erstreckt, wobei das Filtermedium (5) eine Innenfläche (5b) aufweist, die einen Innenraum (9) begrenzt;
- einen axialen Durchgang des Filters, der die obere Wand durchquert und den Innenraum (9) über eine mittlere Öffnung (O1) des oberen Endes erreicht; und
- eine Wasserentleerungsvorrichtung (14), die eine Wasserablassöffnung (15) durchquert, die mit Abstand von dem Boden (2a) in dem Gehäuse (2, 3) gebildet ist, wobei die Wasserentleerungsvorrichtung (14) mindestens eine Wasserablassleitung (16) aufweist, die sich in dem Innenvolumen (V) erstreckt;
**dadurch gekennzeichnet, dass** die Wasserablassleitung (16) den Innenraum (9) durchquert, indem sie vorzugsweise in einer Position neben dem Filtermedium angeordnet ist, und mit dem Filterelement (4) fest verbunden ist, indem sie bezüglich der zentralen Achse (A) des Filtermediums (5) versetzt ist, um den axialen Durchgang des Filters, der die Öffnung (O1) durchquert, nicht zu stören.

2. Filter nach Anspruch 1, wobei das Filterelement (4) eine Struktur (8) von im Wesentlichen röhrenförmiger Form umfasst, die sich in dem Innenraum (9) erstreckt und mit dem Filterelement fest verbunden ist, wobei die Wasserablassleitung (16) vorzugsweise direkt an die Struktur (8) angeschlossen ist.

3. Filter nach Anspruch 2, wobei die Struktur (8) eine Kanalisierungsstruktur bildet, die geeignet ist, Kraftstoff zwischen der Innenseite (5b) des Filtermediums (5) und einem von dem Einlass (3a) und dem Auslass (3b) zu kanalisieren.

4. Filter nach einem der Ansprüche 1 bis 3, wobei das obere Ende durch einen ersten Flansch (6) gebildet ist und das untere Ende durch einen zweiten Flansch (7) gebildet ist, wobei das Filterelement (5) zwischen dem ersten Flansch und dem zweiten Flansch angeordnet ist.

5. Filter nach Anspruch 4, wobei das Filterelement (4) eine Struktur (8) von im Wesentlichen röhrenförmiger Form umfasst, die sich in dem Innenraum (9) erstreckt und an dem ersten Flansch (6) und vorzugsweise ebenfalls an dem zweiten Flansch (7) befestigt ist, wobei die Struktur (8) Folgendes umfasst:
- ein erstes röhrenförmiges Wandelement (31), das sich zwischen dem ersten Flansch (6) und dem zweiten Flansch (7) erstreckt, wobei das erste röhrenförmige Wandelement (31) eine Außenfläche (8a) gegenüber von dem Filtermedium (5) und eine Innenfläche (8b) definiert;
- mindestens ein zweites Wandelement (32), das zwischen dem ersten röhrenförmigen Wandelement (31) und dem Filtermedium (5) angeordnet ist und das mindestens eine seitliche Öffnung (8c) aufweist; und
- die Wasserablassleitung (16), die einstückig mit einem von dem ersten und zweiten Wandelement (31, 32) ausgebildet ist.

6. Filter nach Anspruch 5, wobei das erste röhrenförmige Wandelement (31) eine Trennleitung definiert, die jeweils an den ersten Flansch (6) und an den zweiten Flansch (7) dicht angeschlossen ist und die den Innenraum (9) zwischen einem Bereich vorgelagert vor dem Filtermedium (5), der mit dem Kraftstoffeinlass (3a) in Verbindung steht, und einem Bereich nachgelagert nach dem Filtermedium (5) unterteilt, der mit dem Kraftstoffauslass (3b) in Verbindung steht.

7. Filter nach einem der Ansprüche 4 bis 6, wobei die Wasserablassleitung (16) durch den Innenraum (9) durchgeht und sich zwischen einem ersten Ende (16a) und einem zweiten Ende (17) erstreckt, das im Verhältnis zu dem zweiten Flansch (7) in Richtung des Bodens (2a) des Gehäuses (2, 3) vorsteht, wobei das erste Ende (16a) der Leitung (16) an der Wasserablassöffnung (15) durch Anschlussmittel dicht angeschlossen ist, die in dem ersten Flansch (6) ausgebildet sind und/oder ein ringförmiges Anschlussstück (20) aufweisen, das sich zwischen dem ersten Flansch (6) und der oberen Wand des Gehäuses (2, 3) erstreckt.

8. Filter nach Anspruch 7, wobei das erste Ende (16a) der Wasserablassleitung (16) von der oberen Wand entfernt ist und in einen Abschnitt des Innenvolumens (V) mündet, der auf der Ebene des ersten Flanschs (6) oder zwischen dem ersten Flansch und der oberen Wand angeordnet ist.

9. Filter nach einem der vorhergehenden Ansprüche, wobei die obere Wand eine mittlere Öffnung (40) neben der Wasserablassöffnung (15) und entfernt von dem Einlass (3a) und dem Auslass (3b) aufweist, wobei der Filter (1) mindestens eine Funktionskomponente (34) aufweist, die durch die mittlere Öffnung (40) und durch den axialen Durchgang in das Innenvolumen (V) eingefügt ist.

10. Filter nach Anspruch 9, wenn er von Anspruch 2 abhängt, wobei die Funktionskomponente eine Komponente zum Heizen (34) des Kraftstoffs ist, die abnehmbar und dicht auf dem Gehäuse (2, 3) über die mittlere Öffnung (40) befestigt ist, wobei sich die Komponente zum Heizen durch die Struktur (8) erstreckt, indem sie durch den Innenraum (9) durchgeht.

11. Filter nach Anspruch 9 oder 10, wobei das obere Ende durch einen ersten Flansch (6) gebildet ist, der die mittlere Öffnung (O1) aufweist, wobei die Funktionskomponente (34) einen äußeren Teil und einen Teil zum Einfügen in das Innenvolumen (V) aufweist, wobei einer von dem Teil zum Einfügen und der mittleren Öffnung (O1), vorzugsweise der Teil zum Einfügen, einen vorstehenden Vorsprung (41) aufweist, der ermöglicht, unter Zusammenwirken mit einem komplementären Einschnitt (42) des anderen von dem Teil zum Einfügen und der mittleren Öffnung (O1) das Einfügen der Funktionskomponente (34) zu führen.

12. Filter nach einem der vorhergehenden Ansprüche, wobei das Gehäuse (2, 3) einen Behälter (2) und einen Deckel (3) umfasst, der dicht an den Behälter angeschlossen ist, wobei die obere Wand zu dem Deckel (3) gehört und wobei die untere Wand zu dem Behälter (2) gehört, wobei der Einlass (3a), der Auslass (3b) und die Wasserablassöffnung (15) in dem Deckel (3) ausgebildet sind.

13. Filterelement (4), das eine Filterpatrone bildet, das geeignet ist, in einem Kraftstofffilter (1) nach einem der Ansprüche 1 bis 12 zusammenzuwirken, umfassend ein oberes Ende, beispielsweise in Form von einem ersten Flansch(6), ein unteres Ende, beispielsweise in Form von einem zweiten Flansch (7), ein im Wesentlichen ringförmiges Filtermedium (5), das sich um eine zentrale Achse (A) zwischen dem oberen Ende und dem unteren Ende erstreckt, wobei das Filtermedium eine Innenfläche (5b) aufweist, die einen Innentraum (9) begrenzt, wobei das Filterelement ferner Folgendes umfasst:
- eine Struktur (8), die an dem Filterelement (4) gehalten ist, wobei sich die Struktur vorzugsweise in dem Innenraum (9) erstreckt;
- eine mittlere Öffnung (O1), die in dem oberen Ende ausgebildet ist, und
- mindestens eine Leitung (16), die sich zwischen einem ersten Ende (16a), das auf der Seite des oberen Endes des Filterelements angeordnet ist, und einem zweiten Ende (17) erstreckt, das axial zur Außenseite in Bezug auf das untere Ende des Filterelements vorspringt, um in einen Wasseransammlungsbereich (12) des Kraftstofffilters (1) einzutauchen;
**dadurch gekennzeichnet, dass** sich die Leitung (16) in dem Innenraum (9) erstreckt, indem sie vorzugsweise in einer Position neben dem Filtermedium angeordnet ist, und mit der Struktur (8) fest verbunden ist, indem sie bezüglich der zentralen Achse (A) des Filtermediums (5) versetzt ist, um einen axialen Durchgang des Filters, der die Öffnung (O1) durchquert, nicht zu stören, und ermöglicht, Wasser zwischen einer Einlassöffnung, die durch das zweite Ende (17) definiert ist, und einer Auslassöffnung, die durch das erste Ende (16a) definiert ist, fließen zu lassen.

## Claims

1. Water-separating fuel filter (1), comprising:
- a housing (2, 3) comprising an upper wall and a lower wall having a bottom (2a), with the housing defining an inner volume (V) and having a crude fuel inlet (3a) and a filtered fuel outlet (3b) placed remote from said bottom (2a);
- a filtering element (4) placed in the inner volume (V), remote from the bottom (2a) in such a way as to arrange a water accumulation zone between the filtering element and the bottom, said filtering element (4) comprising an upper end, a lower end and a substantially annular filtering medium (5) extending around a central axis (A) between the upper end and the lower end, with the filtering medium (5) having an inner face (5b) which defines an interior space (9);
- an axial passage of the filter which crosses the upper wall and joins the interior space (9) through a central opening (O1) of said upper end; and
- a water discharging device (14) that crosses a water evacuation opening (15) formed remotely from the bottom (2a) in the housing (2, 3), the water discharging device (14) comprising at least one water evacuation pipe (16) that extends into the inner volume (V);
**characterised in that** the water evacuation pipe (16) crosses the interior space (9), by being arranged more preferably in a position adjacent to the filtering medium, and is integral with the filtering element (4) by being offset with respect to the central axis (A) of the filtering medium (5) in order to not interfere with the axial passage of the filter crossing the opening (O1).

2. Filter according to claim 1, wherein the filtering element (4) comprises a structure (8) of substantially tubular shape that extends in said interior space (9) and is integral with the filtering element, the water evacuation pipe (16) being preferably directly connected to the structure (8).

3. Filter according to claim 2, wherein the structure (8) constitutes a channelling structure able to channel fuel between the inner face (5b) of the filtering medium (5) and one from among the inlet (3a) and the outlet (3b).

4. Filter according to any of claims 1 to 3, wherein the upper end is comprised by a first flange (6) and the lower end is comprised by a second flange (7), with the filtering medium (5) being placed between the first flange and the second flange.

5. Filter according to claim 4, wherein the filtering element (4) comprises a structure (8) with a substantially tubular shape which extends in said interior space (9) and is fixed to the first flange (6), and more preferably also to the second flange (7), said structure (8) comprising:
- a first tubular wall element (31) that extends between the first flange (6) and the second flange (7), with the first tubular wall element (31) defining an outer surface (8a) with respect to the filtering medium (5) and an inner surface (8b);
- at least one second wall element (32) arranged between the first tubular wall element (31) and the filtering medium (5), and which has at least one lateral opening (8c); and
- said water evacuation pipe (16) which is entirely formed with one from said first and second wall elements (31,32).

6. Filter according to claim 5, wherein the first tubular wall element (31) defines a separation pipe connected in a sealed manner respectively to the first flange (6) and to the second flange (7) and which partitions said interior space (9) between a zone upstream of the filtering medium (5) that communicates with the fuel inlet (3a) and a zone downstream of the filtering medium (5) that communicates with the fuel outlet (3b).

7. Filter according to any of claims 4 to 6, wherein the water evacuation pipe (16) passes through the interior space (9) and extends between a first end (16a) and a second end (17) that protrudes with respect to the second flange (7) in the direction of the bottom (2a) of the housing (2, 3), the first end (16a) of the pipe (16) being connected in a sealed manner to the water evacuation opening (15) by connecting means that are formed in the first flange (6) and/or comprise an annular connection part (20) extending between the first flange (6) and the upper wall of the housing (2, 3).

8. Filter according to claim 7, wherein the first end (16a) of the water evacuation pipe (16) is remote from the upper wall and opens into a portion of the inner volume (V) which is located on the first flange (6) or between the first flange and the upper wall.

9. Filter as claimed in any preceding claim, wherein the upper wall has a central opening (40) adjacent to the water evacuation opening (15) and remote from the inlet (3a) and from the outlet (3b), the filter (1) comprising at least one functional component (34) inserted into the inner volume (V) through the central opening (40) and through said axial passage.

10. Filter according to claim 9 when it depends on claim 2, wherein said functional component is a heating component (34) of the fuel mounted in a removable and sealed manner on the housing (2, 3) through said central opening (40), said heating component extending through the structure (8) by passing through said interior space (9).

11. Filter according to claim 9 or 10, wherein the upper end is comprised of a first flange (6) that has said central opening (O1), said functional component (34) having an outer portion and an insertion portion in the inner volume (V), one from among the insertion portion and the central opening (O1), preferably the insertion portion, having a protruding projection (41) which makes it possible, by cooperating with a notch (42) that is complementary with the other from the insertion portion and the central opening (O1), to guide the insertion of the functional component (34).

12. Filter as claimed in any preceding claim, wherein the housing (2, 3) comprises a bowl (2) and a cover (3) connected in a sealed manner to the bowl, said upper wall belonging to the cover (3) and said lower wall belonging to the bowl (2), with the inlet (3a), the outlet (3b) and the water evacuation opening (15) being formed in the cover (3).

13. Filtering element (4) forming a filtering cartridge, adapted to cooperate in a fuel filter (1) according to any of claims 1 to 12, comprising an upper end for example in the form of a first flange (6), a lower end for example in the form of a second flange (7), a substantially annular filtering medium (5) extending around a central axis (A) between the upper end and the lower end, with the filtering medium having an inner face (5b) that defines an interior space (9), the filtering element further comprising:
- a structure (8) which is maintained to the filtering element (4), the structure extending more preferably in said interior space (9);
- a central opening (O1) formed in the upper end; and
- at least one pipe (16) extending between a first end (16a) located on the side of the upper end of the filtering element and a second end (17) protruding axially outwards with respect to the lower end of the filtering element in order to be able to plunge into a water accumulation zone (12) of the fuel filter (1);
**characterised in that** the pipe (16) extends in the interior space (9), by being arranged more preferably in a position adjacent to the filtering medium, and is integral with said structure (8) by being offset in relation to the central axis (A) of the filtering medium (5) in order to not interfere with an axial passage of the filter passing through the opening (O1) and which makes it possible to circulate water between an inlet opening defined by the second end (17) and an outlet opening defined by the first end (16a).
